**Europäisches Patentamt**

**European Patent Office**

**Office européen des brevets**

(11) Veröffentlichungsnummer: **0 410 109 A1**

## (12) EUROPÄISCHE PATENTANMELDUNG

(21) Anmeldenummer: **90110002.4**

(22) Anmeldetag: **26.05.90**

(51) Int. Cl.⁵: **A01C 17/00**

(30) Priorität: **22.07.89 DE 3924330**

(43) Veröffentlichungstag der Anmeldung:
**30.01.91 Patentblatt 91/05**

(84) Benannte Vertragsstaaten:
**DE FR GB**

(71) Anmelder: **RAUCH LANDMASCHINENFABRIK GMBH**

**D-7573 Sinzheim(DE)**

(72) Erfinder: **Rauch, Norbert, Dipl.-Ing.**
**Bergseestrasse 49**
**D-7573 Sinzheim(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**D-7500 Karlsruhe 41(DE)**

(54) **Schleuderstreuer für rieselfähiges Streugut, insbesondere Dünger.**

(57) Ein Schleuderstreuer für rieselfähiges Streugut besteht aus einem Vorratsbehälter (1) mit wenigstens einer einstellbaren Auslauföffnung (3) und je einer unter jeder Auslauföffnung angeordneten Schleuderscheibe (6) mit Wurfflügeln (8) und einer Einrichtung zum Neigen des Schleuderstreuers aus einer horizontalen Normallage für die Bodendüngung in eine entgegen der Fahrtrichtung nach hinten ansteigend geneigte Lage für die Spätdüngung. Um die durch das Neigen des Schleuderstreuers entstehende Veränderung des Streubildes zu kompensieren ist vorgesehen, daß in der geneigten Lage für die Spätdüngung der die Relativlage zwischen Auslauföffnung und Schleuderscheibe (6) bestimmende Aufgabepunkt des Streugutes auf der Schleuderscheibe (6) gegenüber der Lage für die Bodendüngung entgegen der Drehrichtung und/oder nach außen verlagerbar ist.

Fig. 1

# SCHLEUDERSTREUER FÜR RIESELFÄHIGES STREUGUT, INSBESONDERE DÜNGER

Die Erfindung betrifft einen Schleuderstreuer für rieselfähiges Streugut, insbesondere Dünger, bestehend aus einem Vorratsbehälter mit wenigstens einer einstellbaren Auslauföffnung und je einer unter jeder Auslauföffnung angeordneten Schleuderscheibe mit Wurfflügeln und einer Einrichtung zum Neigen des Schleuderstreuers aus einer horizontalen Normallage für die Bodendüngung in eine entgegen der Fahrtrichtung nach hinten ansteigend geneigte Lage für die Spätdüngung.

Schleuderstreuer des vorgenannten Aufbaus werden in der Regel mit zwei Schleuderscheiben betrieben, um über die Streubreite ein Streubild zu erhalten, das beim Anschlußfahren zu einer gleichmäßigen Verteilung über die Arbeitsbreite führt. Der Schleuderstreuer wird üblicherweise von dem Dreipunktgestänge eines Schleppers aufgenommen und kann auf diese Weise in Grenzen angehoben, vor allem aber auch geneigt werden. Dies gibt insbesondere die Möglichkeit, mit dem Schleuderstreuer sowohl eine Bodendüngung, als auch eine Spätdüngung der bereits aufgewachsenen Frucht vorzunehmen, indem der Schleuderstreuer in der horizontalen Normallage für die Bodendüngung und in einer nach hinten ansteigenden Lage für die Spätdüngung betrieben wird. Aufgrund der geneigten Lage ist es bei gleicher oder geringfügig angehobener Lage möglich, dem Dünger eine solche Abflugbahn zu verleihen, daß er von oben auf die Frucht niedergeht bzw. seine Ausbreitung nicht von der bis auf Scheibenhöhe stehenden Frucht beeinträchtigt wird.

Mit dem Neigen des Schleuderstreuers in die Spätdüngungslage ist aber zugleich eine Veränderung des Streubildes, gegebenenfalls auch der Streubreite verknüpft, was in der Regel eine andere Arbeitsbreite gibt. Dies wiederum ist aufgrund der vorgegebenen Fahrgassen nicht möglich. Der Landwirt muß also für eine Arbeitsbreite je ein Schleuderscheibenpaar für die Normal- und die Spätdüngung zur Verfügung haben, während der Hersteller, der den Schleuderstreuer für mehrere Arbeitsbreiten anbieten muß, zugleich eine Mehrzahl von Scheibenpaaren unterschiedlicher Art bereitstellen muß. Hinzu kommt für jede Düngungsart in der Regel auch noch eine Grenzstreuscheibe, die das für das Grenzstreuen erforderliche steilflankige Streubild erzeugt, so daß der zumeist auf eine Arbeitsbreite eingestellte Landwirt für beide Düngungsarten wenigstens sechs Schleuderscheiben benötigt, der Hersteller eine entsprechend noch größere Anzahl von Scheiben bereitstellen und zudem entsprechende Vorkehrungen gegen das Verwechseln treffen muß. Hinzu kommt für den Landwirt die Notwendigkeit des häufigen Scheibenwechsels.

Der Erfindung liegt die Aufgabe zugrunde, einen Schleuderstreuer des eingangs genannten Aufbaus so auszubilden, daß für die Boden- und die Spätdüngung, wie auch für das Grenzstreuen bei diesen beiden Düngungsarten ein Scheibenwechsel nicht mehr notwendig ist.

Diese Aufgabe wird erfindungsgemäß dadurch gelöst, daß in der geneigten Lage für die Spätdüngung der die Relativlage zwischen Auslauföffnung und Schleuderscheibe bestimmende Aufgabepunkt des Streugutes auf der Schleuderscheibe gegenüber der Lage für die Bodendüngung entgegen der Drehrichtung und/oder nach außen verlagerbar ist.

Mit der erfindungsgemäß vorgesehenen Verlagerung des Aufgabepunktes bei Neigen des Streuers in die Spätdüngungslage ergibt sich eine andere Abwurfcharakteristik. Der Dünger verläßt die Scheibe zu einem früheren Zeitpunkt und wird weniger weit getragen. Dadurch und durch eine in Abhängigkeit von der Charakteristik der Schleuderscheibe spezifisch angepaßte Verlagerung des Aufgabepunktes läßt sich ein etwa gleiches Streubild bei gleicher Streubreite erzielen. Beide Düngungsarten sind mit einem einzigen Scheibenpaar duchzuführen, so daß der Landwirt jeglicher Montage- und Demontagearbeiten enthoben ist und der Hersteller für eine Arbeitsbreite auch nur ein Scheibenpaar bereitstellen muß. Auch Verwechslungen von Scheiben beim Landwirt sind ausgeschlossen. Je nach Anbauhöhe des Schleuderstreuers kann es notwendig sein, ihn beim Kippen in die Spätdüngungslage auch etwas anzuheben.

Die Verlagerung des Aufgabepunktes läßt sich auf verschiedene Art verwirklichen. So kann vorgesehen sein, daß die Schleuderscheibe zwischen einer für die Normaldüngung bestimmten Lage in Drehrichtung in eine Lage für die Spätdüngung verstellbar ist.

Eine solche Ausbildung ist insbesondere dann möglich, wenn die beiden Schleuderscheiben getrennt, z. B. hydraulisch, oder über einen nachgiebigen Getriebezug angetrieben sind.

Statt dessen können auch Maßnahmen, die im Stand der Technik - wenn auch zu anderem Zweck - bekannt sind, angewendet werden. So kann beispielsweise der die Auslauföffnung aufweisende Boden des Vorratsbehälters verstellbar sein oder aber zwischen der Auslauföffnung und der Schleuderscheibe ein Leitorgan für das Streugut, z. B. in Form einer Rutsche od. dgl., verstellbar angeordnet sein.

In weiterer Ausgestaltung der Erfindung ist vorgesehen, daß zwischen der Auslauföffnung und der Schleuderscheibe als Leitorgan ein feststehender Auslaufschacht angeordnet ist, der dicht über den Wurfflügeln endet, und daß die Einstellung der Auslauföffnung von kleinen zu großen Durchsatzmengen derart erfolgt, daß der durch den Flächenschwerpunkt des Streugutstrahlquerschnitts gegebene Aufgabepunkt auf der Schleuderscheibe entgegen deren Drehrichtung und/oder nach außen wandert. Dadurch, daß der Auslaufschacht dicht über dem Wurfflügel endet, werden einerseits die Prallverluste gemindert, andererseits gewährleistet, daß der Streugutstrahl nicht unkontrolliert aufgerissen wird, so daß die Wanderung des Flächenschwerpunktes des Streugutstrahlquerschnitts zu einer reproduzierbaren Wanderung des Aufgabepunktes führt.

Überwiegend sind Schleuderstreuer des hier zur Rede stehenden Aufbaus von dem Dreipunktgestänge eines Schleppers aufgenommen, so daß der Schleuderstreuer auch mittels des Dreipunktgestänges in die Neigungslage verbracht werden kann. Dabei ist es ferner regelmäßig so, daß die Schleuderscheiben von der Zapfwelle über eine Gelenkwelle und ein Winkelgetriebe angetrieben werden, so daß ihr absoluter Gleichlauf sichergestellt ist. In diesem Fall läßt sich die Verlagerung des Aufgabepunktes dadurch verwirklichen, daß die Schleuderscheiben zusammen mit dem Getriebe zwischen einer Stellung für die Bodendüngung und einer solchen für die Spätdüngung verstellbar sind.

Der für die Verlagerung des Getriebes mit den Schleuderscheiben notwendige Stellweg wird bei dieser Ausführungsform von der Gelenkwelle aufgenommen.

Sind hingegen die Schleuderscheiben hydraulisch angetrieben, so sind sie in der Regel an einem Träger angeordnet. In diesem Fall können die Schleuderscheiben mittels des Trägers zwischen einer Lage für die Bodendüngung und einer solchen für die Spätdüngung verstellbar sein.

In weiterhin vorteilhafter Abwandlung kann vorgesehen sein, daß der Schleuderstreuer in wenigstens einer zwischen der Lage für die Bodendüngung und derjenigen für die Spätdüngung befindlichen Zwischenlage einstellbar ist, die hinsichtlich der Neigungslage zwischen den beiden vorgenannten Stellungen liegt, und daß in der Zwischenlage der Aufgabepunkt entgegen der Drehrichtung in eine Zwischenlage verstellbar ist.

Eine solche Zwischenlage empfiehlt sich dann, wenn im Laufe einer Wuchsperiode mehrfach einzelne Düngergaben gestreut werden sollen, um ein Überdüngen zu vermeiden und nur die für die jeweilige Wuchsperiode notwendige Menge und die hierfür notwendige Qualität des Düngers zu streuen.

Die Schleuderscheiben sind in der Regel so montiert, daß sie ausgewechselt werden können, sei es aus Reparaturgründen oder zur Verwirklichung unterschiedlicher Arbeitsbreiten. So ist es insbesondere auch bekannt, für das Grenzstreuen eine eigene Schleuderscheibe einzusetzen, die ein steil flankiges Streubild aufweist. Bisher mußte der Landwirt für die Bodendüngung und für die Spätdüngung jeweils eine gesonderte Grenzstreuscheibe einsetzen. Durch die erfindungsgemäße Ausbildung ist es möglich, für eine bestimmte Arbeitsbreite die gleiche Grenzstreuscheibe für jede Position des Schleuderstreuers, also für die Boden- und die Spätdüngung sowie für jede Zwischenlage vorzusehen, so daß der Landwirt bei der für ihn üblichen Arbeitsbreite nur einen Satz gleicher Schleuderscheiben für jede Düngungsart und eine zusätzliche Grenzstreuscheibe benötigt.

In besonderen Fällen kann vorgesehen sein, daß der Aufgabepunkt für die Grenzstreuscheibe gegenüber dem der anderen Schleuderscheibe gesondert verlagerbar ist.

Mit dieser gesonderten Verlagerung des Aufgabepunktes für die Grenzstreuscheibe ist es möglich, den besonderen Verhältnissen beim Grenzstreuen insbesondere dann Rechnung zu tragen, wenn durch das Neigen des Schleuderstreuers sich das Streubild der Grenzstreuscheibe in anderer Weise ändert als das der Normaldüngungsscheibe.

Vorzugsweise werden bei der erfindungsgemäßen Ausbildung des Schleuderstreuers Schleuderscheiben verwendet, die von ihrer Achse nach außen mit einem Winkel von mindestens 10 Grad, vorzugsweise von mindestens 5 Grad konisch ansteigend geneigt sind. Diese tellerförmigen Schleuderscheiben sind an sich bekannt.

Weiterhin ist es zweckmäßig, wenn der Schleuderstreuer in der Spätdüngungslage unter einem Winkel von größer als 5 Grad, vorzugsweise von größer als 3 Grad nach hinten ansteigend geneigt ist.

Nachstehend ist die Erfindung anhand schematisch dargestellter Ausführungsbeispiele gezeigt. In der Zeichnung zeigen:

Figur 1 eine schematische Seitenansicht eines Zwei-Scheiben-Streuers;

Figur 2 eine Ansicht auf die Rückseite des Zwei-Scheiben-Streuers nach Figur 1;

Figur 3 eine Draufsicht auf die Schleuderscheiben in einer ersten Ausführungsform des Antriebs und

Figur 4 eine der Figur 3 entsprechende Ansicht einer anderen Ausführungsform.

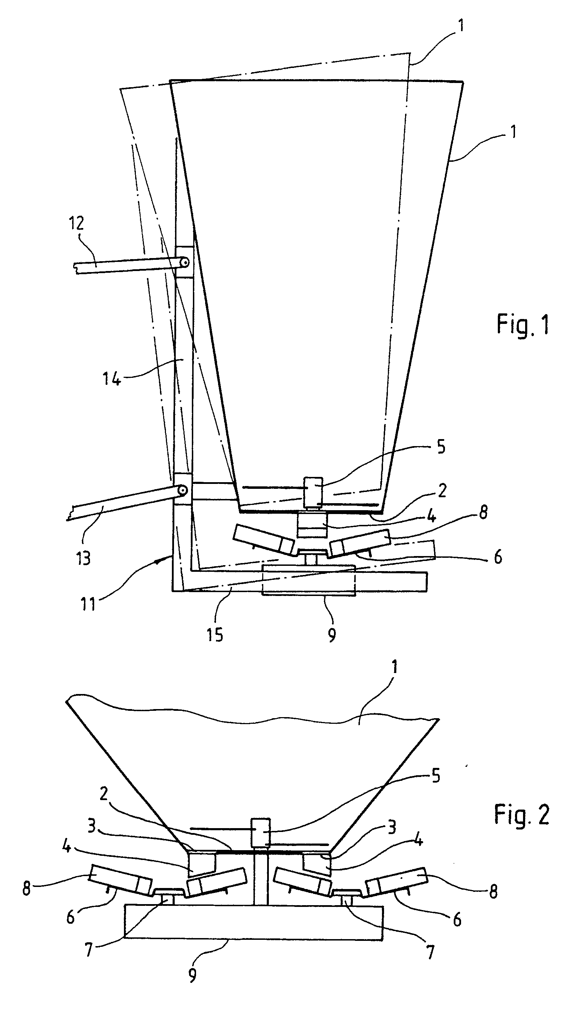

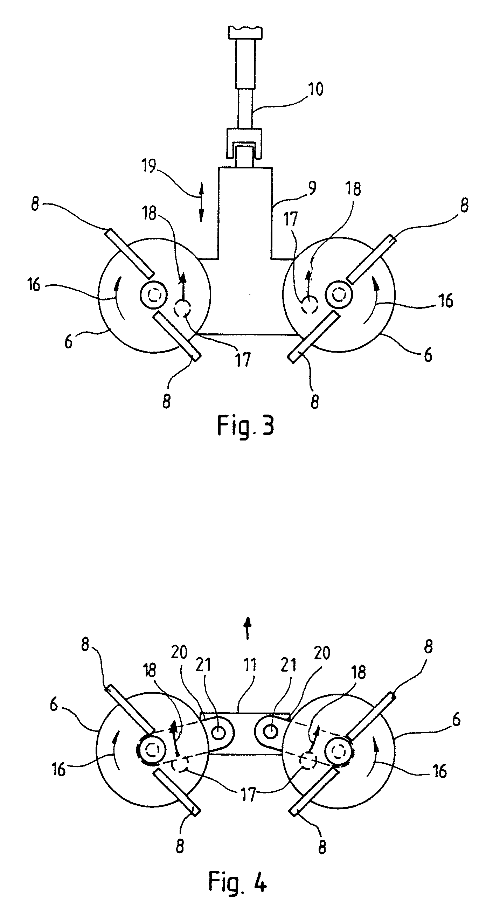

Der in Figur 1 und 2 schematisch angedeutete Schleuderstreuer weist einen Vorratsbehälter 1 mit einem Boden 2 und darin angeordneten, diametral gegenüberliegenden Auslauföffnungen 3 auf, an die nach unten ragende Auslaufschächte 4 anschließen. Innerhalb des Vorratsbehälters läuft ein Rührer 5 um, der den Dünger insbesondere oberhalb der Auslauföffnungen 3 in Bewegung hält.

Unterhalb der Auslauföffnungen bzw. der Auslaufschächte 4 ist jeweils eine Schleuderscheibe 6 angeordnet, die tellerförmig nach außen ansteigend ausgebildet ist und je zwei Wurfflügel 8 aufweist.

Die Schleuderscheiben 6 sind beim gezeigten Ausführungsbeispiel mit ihren Achsen 7 in einem Getriebeblock 9 gelagert, der ein Eckgetriebe enthält. Sie werden von der Zapf welle eines nicht gezeigten Schleppers über eine Gelenkwelle (siehe Figur 3) und das Eckgetriebe angetrieben.

Der Schleuderstreuer weist ferner einen L-förmigen Rahmen 11 auf, mittels dessen er von dem Dreipunktgestänge des Schleppers aufgenommen wird. Von dem Dreipunktgestänge sind in Figur 1 der Oberlenker 12 und die Unterlenker 13 erkennbar, die gelenkig an dem vertikalen Abschnitt 14 des L-förmigen Rahmens angreifen, während zwischen den horizontalen Abschnitten 15 des L-förmigen Rahmens der Getriebeblock 9 angeordnet ist.

Der Schleuderstreuer kann aus der in Figur 1 mit durchgezogenen Linien wiedergegebenen Position für die Bodendüngung, in der der untere Schenkel 15 des L-förmigen Rahmens etwa horizontal verläuft, nach hinten oben ansteigend geneigt werden, wie dies mit strichpunktierten Linien angedeutet ist. In dieser Lage, die wenigstens 3 Grad gegenüber der Horizontalen geneigt ist, kann eine Spätdüngung vorgenommen werden.

Um die Veränderung des Streubildes, die sich durch die Neigungslage ergibt, auszugleichen, wird der Aufgabepunkt, das heißt die Relativlage zwischen Auslauföffnung 3 und Schleuderscheibe 6 geändert. Hierfür zeigen die Figuren 3 und 4 zwei Ausführungsformen.

Figur 3 zeigt eine Ausführungsform, bei der, wie bei Figur 1 und 2, die Schleuderscheiben 6 über ein Eckgetriebe, das mit dem Getriebeblock 9 angedeutet ist, synchron angetrieben werden. Die Schleuderscheiben 6 laufen von außen nach innen gegensinnig um, wie dies mit den Pfeilen 16 angedeutet ist. Ferner ist in Figur 3 für beide Schleuderscheiben der Aufgabepunkt 17 des Streugutes mit gestrichelter Linie angedeutet. Die in Figur 3 gezeigte Lage ent spricht etwa der Bodendüngung. Wird der Schleuderstreuer, wie mit Bezug auf Figur 1 geschildert, nach hinten ansteigend geneigt, also in die Spätdüngungslage gebracht, so wird der Aufgabepunkt 17 entgegen der Drehrichtung, wie dies mit den Pfeilen 18 angedeutet ist, gegenüber der Schleuderscheibe 6 verlagert. Diese Verlagerung kann gegebenfalls auch noch eine nach außen gerichtete Bewegungskomponente aufweisen, so daß der Aufgabepunkt 17 entgegen der Drehrichtung und nach außen wandert. Ebenso ist es möglich, den Aufgabepunkt 17 in einer geneigten Zwischenlage um einen geringeren Betrag entgegen der Drehrichtung zu verlagern.

Bei dem Ausführungsbeispiel gemäß Figur 3 kann die Verlagerung des Aufgabepunktes dadurch geschehen, daß der Getriebeblock 9 in dem Rahmen 11 verschiebbar entsprechend dem Doppelpfeil 19 gelagert ist. Beispielsweise wird der Getriebeblock 9 für die Spätdüngung entgegen der Fahrtrichtung nach hinten, für die Bodendüngung nach vorne und für eine eventuelle Zwischenlage in eine entsprechende Zwischenposition verschoben. In diesem Fall ist dafür Rechnung zu tragen, daß das Rührwerk 5 getrennt oder aber über nachgiebige Getriebemittel angetrieben wird.

In Figur 4 ist ein Ausführungsbeispiel gezeigt, bei dem die Schleuderscheiben 6 getrennt, z. B. hydraulisch angetrieben sind. In diesem Fall können die Schleuderscheiben über einen Schwenkarm 20 an geeigneter Stelle des Rahmens 11 bei 21 gelagert sein, so daß durch Verschwenken der ortsfest bleibende Aufgabepunkt 17 auf der Schleuderscheibe 6 wandert. Für die Wanderungsrichtung gilt das gleiche wie mit Bezug auf Figur 3 beschrieben.

Statt dessen ist es auch möglich, die Auslauföffnungen 3 mit den Auslaufschächten 4 zu verlagern, was durch einen entsprechend verstellbaren Boden oder durch Blendenkonstruktionen an den Auslauföffnungen erfolgen kann.

## Ansprüche

1. Schleuderstreuer für rieselfähiges Streugut, insbesondere Dünger, bestehend aus einem Vorratsbehälter mit wenigstens einer einstellbaren Auslauföffnung und je einer unter jeder Auslauföffnung angeordneten Schleuderscheibe mit Wurfflügeln und einer Einrichtung zum Neigen des Schleuderstreuers aus einer horizontalen Normallage für die Bodendüngung in eine entgegen der Fahrtrichtung nach hinten ansteigend geneigte Lage für die Spätdüngung, dadurch gekennzeichnet, daß in der geneigten Lage für die Spätdüngung der die Relativlage zwischen Auslauföffnung (3) und Schleuderscheibe (6) bestimmende Aufgabepunkt (17) des Streugutes auf der Schleuderscheibe gegenüber der Lage für die Bodendüngung entgegen der Drehrichtung (16) und/oder nach außen verlagerbar ist.

2. Schleuderstreuer nach Anspruch 1, dadurch gekennzeichnet, daß die Schleuderscheibe (6) zwischen einer für die Normaldüngung bestimmten Lage in Drehrichtung (16) in eine Lage für die Spätdüngung verstellbar ist.

3. Schleuderstreuer nach Anspruch 1 oder 2, dadurch gekennzeichnet, daß der die Auslauföffnung (3) aufweisende Boden (2) des Vorratsbehälters (1) verstellbar ist.

4. Schleuderstreuer nach Anspruch 1 oder 2, dadurch gekennzeichnet, daß zwischen der Auslauföffnung (3) und der Schleuderscheibe (6) ein Leitorgan für das Streugut verstellbar angeordnet sind.

5. Schleuderstreuer nach einem der Ansprüche 1 bis 3, dadurch gekennzeichnet, daß zwischen der Auslauföffnung (3) und der Schleuderscheibe (6) als Leitorgan ein feststehender Auslaufschacht (4) angeordnet ist, der dicht über den Wurfflügeln (8) endet, und daß die Einstellung der Auslauföffnung (3) von kleinen zu großen Durchsatzmengen derart erfolgt, daß der durch den Flächenschwerpunkt des Streugutstrahlquerschnitts gegebene Aufgabepunkt (17) auf der Schleuderscheibe (6) entgegen deren Drehrichtung und/oder nach außen wandert.

6. Schleuderstreuer nach Anspruch 1, 2 oder 5, der von einem Schlepper aufgenommen ist und dessen Schleuderscheibe von der Zapfwelle bzw. einer daran anschließenden Gelenkwelle über ein Getriebe angetrieben ist, dadurch gekennzeichnet, daß die Schleuderscheiben (6) zusammen mit dem Getriebe (9) zwischen einer Stellung für die Bodendüngung und einer solchen für die Spätdüngung verstellbar sind.

7. Schleuderstreuer nach Anspruch 1 oder 2 mit hydraulisch direkt angetriebenen und von einem Träger aufgenommenen Schleuderscheiben, dadurch gekennzeichnet, daß die Schleuderscheiben (6) mittels des Trägers (20) zwischen einer Lage für die Bodendüngung und einer solchen für die Spätdüngung verstellbar sind.

8. Schleuderstreuer für rieselfähiges Streugut, insbesondere Dünger, bestehend aus einem Vorratsbehälter mit wenigstens einer einstellbaren Auslauföffnung und je einer unter jeder Auslauföffnung angeordneten Schleuderscheibe mit Wurfflügeln und einer Einrichtung zum Neigen des Schleuderstreuers aus einer horizontalen Normallage für die Bodendüngung in eine entgegen der Fahrtrichtung nach hinten ansteigend geneigte Lage für die Spätdüngung, insbesondere nach einem der Ansprüche 1 bis 7, dadurch gekennzeichnet, daß der Schleuderstreuer in wenigstens einer zwischen der Lage für die Bodendüngung und derjenigen für die Spätdüngung befindlichen Zwischenlage einstellbar ist, die hinsichtlich der Neigungslage zwischen den beiden vorgenannten Stellungen liegt, und daß in der Zwischenlage der Aufgabepunkt (17) entgegen der Drehrichtung (16) in eine Zwischenlage verstellbar ist.

9. Schleuderstreuer nach einem der Ansprüche 1 bis 7 mit zwei auswechselbaren Schleuderscheiben gleichen Aufbaus, von denen eine gegen eine Grenzstreuscheibe austauschbar ist, dadurch gekennzeichnet, daß für eine bestimmte Arbeitsbreite die gleiche Grenzstreuscheibe für jede Position des Schleuderstreuers vorgesehen ist.

10. Schleuderstreuer nach einem der Ansprüche 1 bis 8, dadurch gekennzeichnet, daß der Aufgabepunkt (17) für die Grenzstreuscheibe gegenüber dem der anderen Schleuderscheibe (6) gesondert verlagerbar ist.

11. Schleuderstreuer nach einem der Ansprüche 1 bis 10, dadurch gekennzeichnet, daß die Schleuderscheibe (6) von ihrer Achse nach außen mit einem Winkel von mindestens 10 Grad konisch ansteigend geneigt ist.

12. Schleuderstreuer nach einem der Ansprüche 1 bis 11, dadurch gekennzeichnet, daß die Schleuderscheibe (6) von ihrer Achse (7) nach außen mit einem Winkel von mindestens 5 Grad konisch ansteigend geneigt ist.

13. Schleuderstreuer nach einem der Ansprüche 1 bis 12, dadurch gekennzeichnet, daß er in der Spätdüngungslage unter einem Winkel von größer als 5 Grad nach hinten ansteigend geneigt ist.

14. Schleuderstreuer nach einem der Ansprüche 1 bis 13, dadurch gekennzeichnet, daß er in der Spätdüngungslage unter einem Winkel von größer als 3 Grad nach hinten ansteigend geneigt ist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | MOTORISATION & TECHNIQUE AGRICOLE Nr. 73, Januar 1985, Seiten 7-23, Bois-le-roi, FR; J. RENAUD: "Les épandeurs d'engrais solides" * Seiten 10-17 * | 1-10 | A 01 C 17/00 |
| A | DE-A-3 736 827 (AMAZONEN-WERKE H. DREYER GMBH & CO. KG) * Spalte 1, Zeile 60 - Spalte 2, Zeile 14; Abbildungen 2,3 * | 1-4 | |
| A | GB-A-2 151 892 (C. VAN DER LELY N.V.) * Seite 1, Zeilen 16-83; Abbildungen 1,2,5 * | 1,2,6,8,9 | |

RECHERCHIERTE SACHGEBIETE (Int. Cl.5)

A 01 C
B 65 G
E 01 C

Der vorliegende Recherchenbericht wurde für alle Patentansprüche erstellt

| Recherchenort | Abschlußdatum der Recherche | Prüfer |
|---|---|---|
| BERLIN | 21-08-1990 | MERCKX A M |